# EUROPEAN PATENT SPECIFICATION

(11) **EP 0 573 453 B1**
(45) Date of publication and mention of the grant of the patent: **08.11.1995**
(21) Application number: 92904263.8
(22) Date of filing: 27.01.1992
(51) Int. Cl.: F16K 31/528

(54) **DEVICE FOR ALTERNATELY CONTROLLING TWO COOPERATING VALVES, ESPECIALLY SAFETY VALVES ON PRESSURE VESSELS**
VORRICHTUNG ZUM ABWECHSELNDEN STEUERN VON ZWEI ZUSAMMENWIRKENDEN VENTILEN, INSBESONDERE VON SICHERHEITSVENTILEN AN DRUCKKESSELN
DISPOSITIF DE REGULATION ALTERNATIVE DE DEUX SOUPAPES COOPERANTES, EN PARTICULIER DES SOUPAPES DE SECURITE DE RESERVOIRS SOUS PRESSION

(30) Priority: 28.01.1991 SE 9100238
(43) Date of publication of application: 15.12.1993
(73) Proprietor: Armaturjonsson AB, S-421 31 Västra Frölunda (SE)
(72) Inventor: SEBORN, Bo, S-433 61 Partille (SE)
(74) Representative: Wiklund, Erik
(86) International application number: SE9200046
(87) International publication number: WO9213223

(56) References cited:
- DE-A- 2 701 435
- GB-A- 1 372 412
- GB-A- 2 131 124

## Description

The present invention relates to controlling of cooperating valves, especially safety valves on pressure vessels, and more precisely to a control device of the type stated in the preamble of claim 1.

In most countries, strict safety regulations apply to pressure vessels containing inflammable liquids and gases under excess pressure. In Sweden, for example, the Pressure Vessel Commission has issued the publication "Tank Standardisation Rules III" of 1973, which stipulates on pp 14-18 that such pressure vessels must be provided with safety valves which should satisfy a number of requirements. These safety valves should open at a certain maximum pressure in the tank depending on the one hand on the strength of the tank and, on the other hand, on the type of gas contained therein. For conventional liquefied petroleum gas mixtures the opening pressure is about 1.5-2.0 MPa.

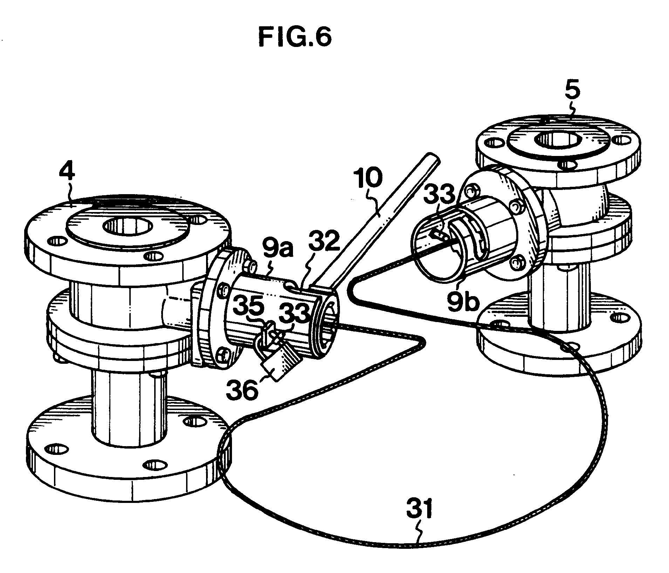

To make it possible to change, service or, for inspection, dismount such valves without safety being jeopardised, a pressure vessel of the above-mentioned type must be provided with two safety valves which are separately disconnectible and of which at least one should continuously be in its active, pressurised position. Between the two safety valves, a device should be arranged by means of which the valves can alternately be disconnected from the pressure. Alternatively, the safety valves are each mounted on a shut-off valve which in turn is arranged on the two outlets of the pressure vessel. The two shut-off valves are mechanically interconnected by a connection device and are usually operated by a lever. Irrespective of the device used, one valve outlet should be fully open when the other is closed, and it should not be possible to throttle the connection in the intermediate position. Examples of devices, in which shutting off is effected before safety means, are shown in "Tank Standardisation Rules III", p. 18, Fig. 6:2.

Ordinary ball valves are often used as shut-off valves. A prior-art device in double safety valves comprises two ball valves connected thereto, which can be rotated through 90° and are arranged with their valve spindles directed towards one another. The spindles are nonrotatably interconnected by means of a coupling rod which is rotatable by means of a lever. Since one ball valve is mounted in a position rotated 90° relative to the other, two positions are alternately provided as the lever is pivoted through 90° (by rotating the coupling rod) in either direction, viz. a first position in which the first valve is open and the second is closed, and a second position in which the first valve is closed and the second is open.

The legally responsible authorities have lately announced that the safety regulations for pressure vessels will be made more stringent. In Sweden, the regulations stated in "Tank Standardisation Rules III" still apply, but with certain complementary additions in the publication "Code of Statutes of the National Board of Occupational Safety and Health", AFS 1988:11, of 1988. The prior-art control devices for alternately disconnecting safety valves, which have been discussed above, will in future not satisfy the more and more stringent requirements. In fact, these control devices suffer from the obvious drawback that both safety valves cannot be in their active pressurised position at the same time, which would improve safety to a considerable extent. Moreover, there is a risk that both shut-off valves are partly open in the intermediate positions during reversing of the valves, which of course is a serious drawback.

A particular inconvenience caused by prior-art control devices is that the mechanical connection between the valves sets limits to the mutual positioning of the valves. For example, the valve spindles must in many cases be directed in a certain way to make it possible to provide an active mechanical connection between them.

One object of the present invention therefore is to obviate these drawbacks by providing a device for alternately controlling two cooperating valves, especially safety valves on pressure vessels, said device allowing both valves to be open in a normal position, and preventing both valves from being fully or partly open in an intermediate position.

A further object is to provide a control device by means of which the valves can easily be put in two different service positions, in which the first valve is fully closed and the second fully open, and vice versa.

One more object is to provide a control device which can be locked in the normal position and in the two service positions for preventing improper manipulation.

A still further object is to provide a control device consisting of a limited number of moving parts which can be operated in simple motions.

A special object is to provide a control device which allows more freedom of mounting the valves in optional positions relative to one another.

The invention further aims at providing a control device which is easily applicable to standard type valves which are adapted to be mounted on existing outlet fittings on pressure vessels.

According to the invention, these and other objects which will be apparent from the specification below have now been achieved by means of a control device which is of the type mentioned by way of introduction and moreover has the features stated in the characterising clause of claim 1. Preferred embodiments of the invention are stated in the subclaims.

The invention will now be described in more detail with reference to the accompanying drawings which illustrate some embodiments.

Fig. 1 is a side view of a control device according to a first embodiment of the invention, mounted between two valve assemblies on a pressure vessel.

Fig. 2 is a schematic perspective view of the control device according to the first embodiment of the invention.

Fig. 3 is a schematic view of the control device shown in Fig. 2, a connecting tube being removed for better clarity.

Fig. 4 is an axial view of a control device according to a second embodiment of the invention.

Fig. 5 is a perspective view of a valve spindle included in the control device illustrated in Fig. 4.

Figs 6 and 7 illustrate a control device according to a third embodiment of the invention.

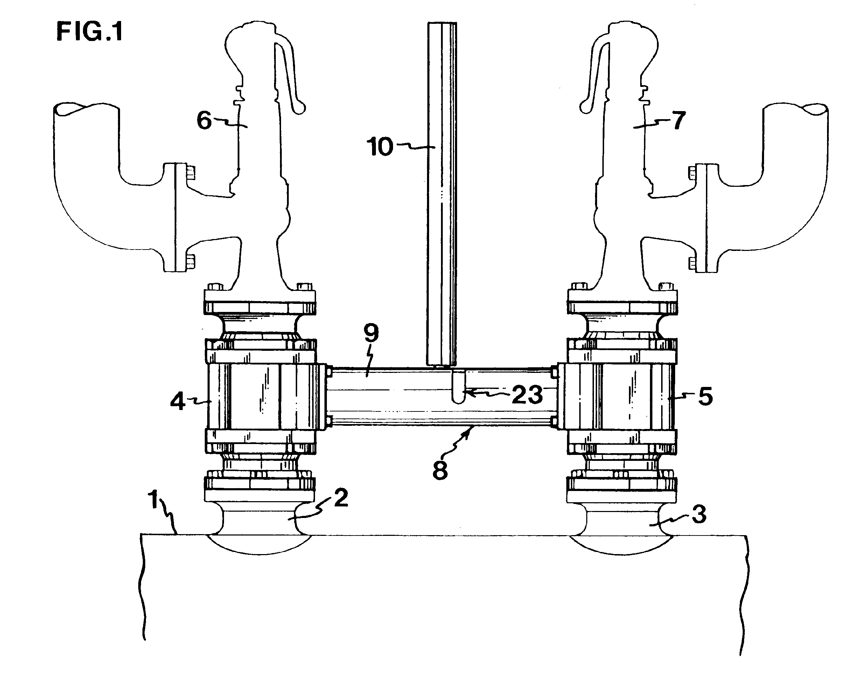

Fig. 1 illustrates a portion of a pressure vessel 1 containing e.g. a liquefied petroleum gas mixture under excess pressure. The pressure vessel 1 comprises in prior-art manner two outlets in the form of two spaced-apart pipe connections 2, 3 on which two identical valve assemblies are mounted.

In a per se known manner, each valve assembly comprises a shut-off valve 4, 5 and a safety valve 6, 7 mounted thereon. All valves 4-7 are standard type valves. As shut-off valves 4, 5, use is preferably made of ball valves with a 90° rotation of the spindle between the open and closed positions. As safety valves 6, 7, use is advantageously made of a valve type with a cone abutting against a seat in connection with the respective outlet. When the pressure in the tank is too high, the cone rises from the seat and emits gas via its outlet tube.

Valves suitable for use in this context are supplied by the Swedish company Armaturjonsson AB, viz. a full-flow ball valve of the AJ 3665 type, and a safety valve of the AJ 4545L type.

Between the two valve assemblies 4, 6 and 5, 7 there is connected a device according to the invention, generally designated 8, for alternately controlling the two cooperating ball valves 4 and 5. According to a first embodiment, the control device 8 comprises a connection tube 9 whose ends are connected with the valve body of the ball valves 4, 5, and a lever 10 for manually operating the ball valves 4, 5 in a manner which will be described in more detail below. For better clarity, the control device 8 and the two ball valves 4, 5 are indicated by thick lines in Fig. 1, whereas the remaining parts are indicated by thin lines.

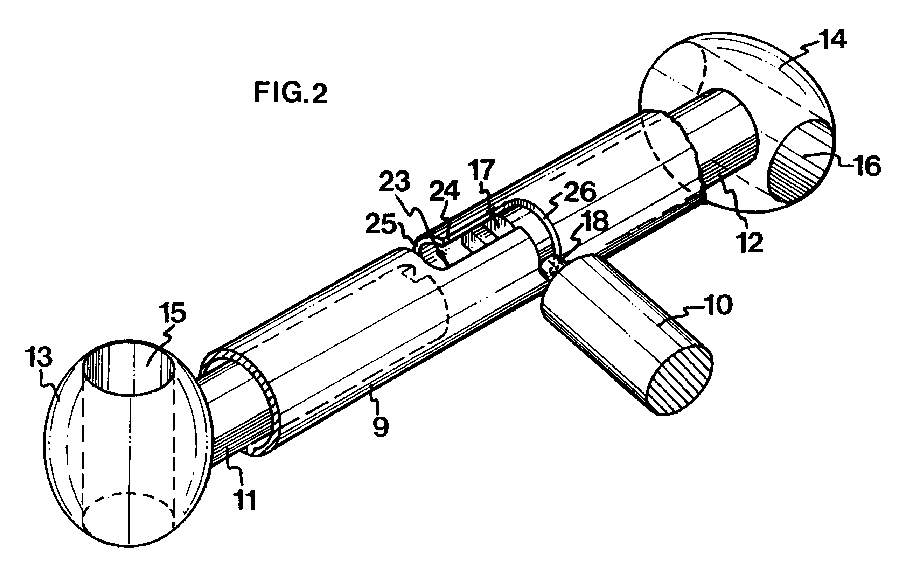

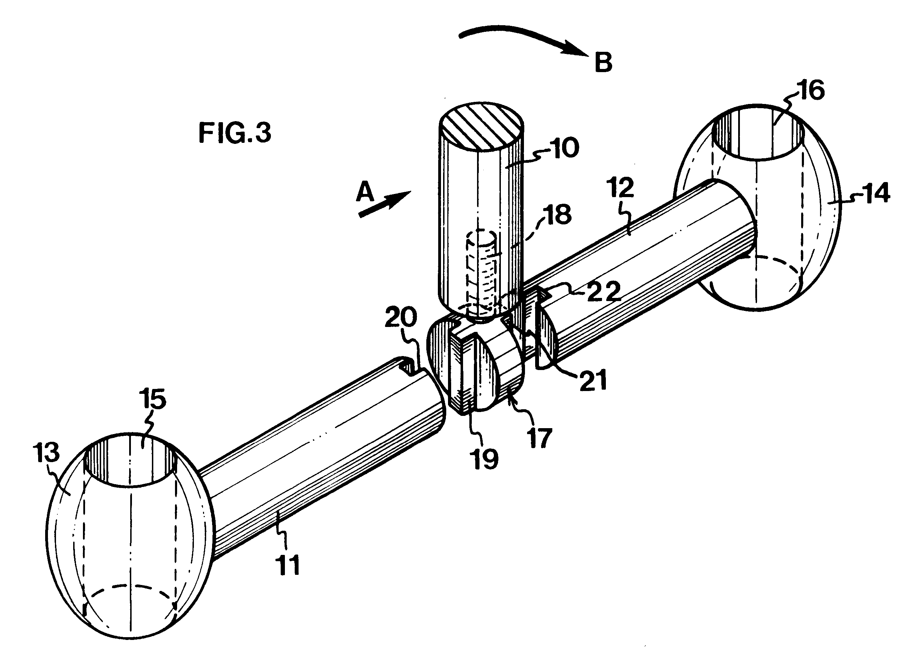

In the normal state, the two ball valves 4, 5 should be open (Figs 1 and 3), implying that the two safety valves 6 and 7 communicate with the pressure vessel 1 and thus are in their active position. By means of the control device 8, it should further be possible to put the ball valves 4, 5 in two different service positions, viz. a first position in which the first ball valve 4 is open while the second ball valve 5 is closed (Fig. 2), and a second position in which the first ball valve 4 is closed while the second ball valve 5 is open. When reversing the ball valves between the service positions, it must not happen that both ball valves 4, 5 are fully or partly closed. If the safety valve 6 is to be dismounted for inspection, the ball valve 4 is closed by means of the control device 8 by pivoting the lever 10. This movement should not affect the ball valve 5 which should be fully open when closing the ball valve 4. Of course, this also applies when the safety valve 7 is to be dismounted.

The control device 8 according to the invention is described in more detail in Figs 2 and 3. The two ball valves 4, 5 comprise in prior-art manner a valve spindle 11, 12 which is nonrotatably connected with a valve member 13, 14 pertaining thereto and having a passage 15, 16. The two spindles 11, 12 are directed towards one another and the spindle ends define a space in which a carrier element 17 is arranged. The carrier element 17 is connected to the end portion of the lever 10 by means of a threaded pin 18. Further the carrier element 17 comprises a first coupling means in the form of a cam 19 for engaging a matching coupling means in the form of a groove 20 in the free end of the first spindle 11. The opposite side of the carrier element 17 is formed with a second coupling cam 21 for engaging a matching groove 22 in the end of the second spindle 12. In the normal state (Fig. 3), both ball valves 4, 5 are open and the carrier element 17 can be moved into coupling engagement with the respective spindle end by means of the lever 10.

Now supposing that the safety valve 7 is to be dismounted. The lever 10 is then moved in the direction of the second spindle 12 (arrow A) until the cam 21 of the carrier element 17 engages the groove 22 in the end of the spindle 12. Subsequently the lever 10 is pivoted in the direction of arrow B to the position illustrated in Fig. 2. During these movements, the lever 10 is guided by means of the pin 18 in a guiding slot generally designated 23 which will be described in more detail below. The closing of the ball valve 5 thus does not affect the open ball valve 4. Of course the same applies to the closing of the ball valve 4, i.e. the open ball valve 5 is not affected.

The guiding slot 23 formed in the tube 9 comprises an axial portion 24 for axially guiding the lever 10 and, thus, the carrier element 17 when moving from the normal position (open valves 4, 5) to one of the service positions. Thus the carrier element 17 is movable between two end positions between the spindle ends. In each end position, the axial slot portion 24 passes into a slot portion 25, 26 extending partially in the circumferential direction of the tube 9. By means of the partially circumferential slot portions 25, 26 the guiding operation is ensured when pivoting the lever 10 in either direction to rotate the carrier element 17 while engaging one spindle end.

By this guiding operation, the carrier element 17 can be axially moved from the normal position (open valves 4, 5) into coupling engagement with one of the spindles 11, 12, but cannot in the service position be moved into coupling engagement with the spindle associated with the valve which in this position is open. Thus, it is ensured that at least one of the ball valves 4, 5 is continuously fully open, at the same time as a state, in which both ball valves 4, 5 are fully or partly closed, is prevented. According to an embodiment not shown, the partially circumferential portions 25, 26 instead extend in the same direction, which means that the guiding slot 23 is U-shaped. The lever 10 is then pivoted in the same direction for both service positions.

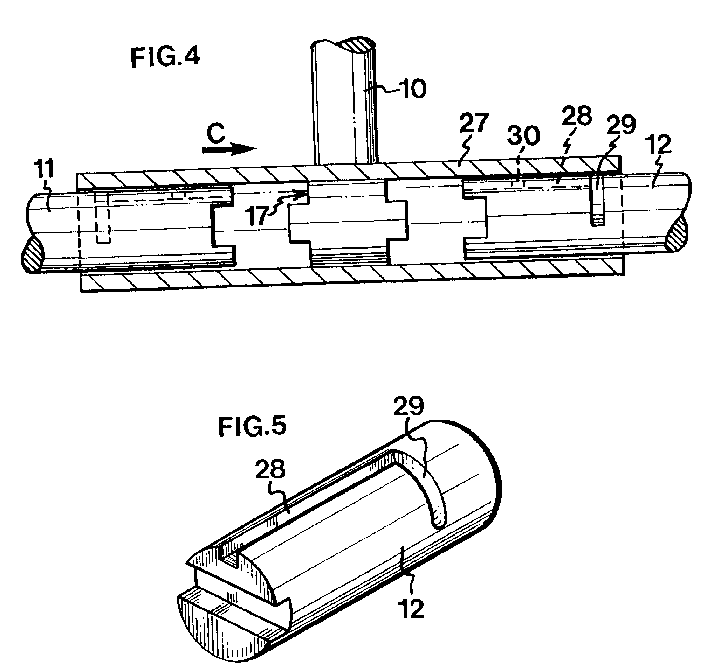

Figs 4-5 illustrate a control device according to a second embodiment of the invention. In this variant, the lever 10 is fixedly connected with a tube member 27 which is axially slidable on the spindles 11, 12 and in which the carrier element 17 is fixedly mounted. The tube member 27 is slidable a distance corresponding to the length of the space between the spindle ends. In this case, the guiding operation is effected by means of slots formed in the outside of the spindles 11, 12 and adapted to cooperate with inwardly directed, fixed projections on the inside of the tube member 27. More precisely, each spindle is formed with an axial slot 28 and a slot 29 extending partially in the circumferential direction of the spindle and passing, in the end position, into the axial slot 28. An inwardly directed projection 30 inside the tube member 27 cooperates with these guiding slots 28, 29. When operating the ball valve 5, the tube member 27 is moved in the direction of arrow C by means of the lever 10, the projection 30 following the axial slot 28 until the carrier element 17 has been moved into coupling engagement with the spindle end. In the subsequent turning motion for closing the associated valve, the projection 30 follows the circumferential slot 29. The same applies to the operation of the spindle 11. According to a variant which is not illustrated, the spindles are instead fitted with projections for cooperation with internal guiding slots in the tube member.

Figs 6-7 illustrate a control device according to a third embodiment of the invention, in which the flexibility of the mutual positioning of the valves 4, 5 is fully developed. The connection tube 9 which is used in the first embodiment may here be said to be cut in the middle (two tube portions 9a and 9b) in order to facilitate optional mounting of the valves 4, 5. Thus, the valves 4, 5 may be arranged on completely different levels, and the spindles 11, 12 need not be axially directed towards one another.

To accomplish the required guiding of the carrier element 17 use is made of an elongate, flexible member in the form of a wire 31 which is connected to each valve 4, 5, more precisely to each spindle 11, 12. The carrier element 17 is a tube member 32 which is fixedly connected with the lever 10 and slipped over and freely movable along the wire 31 between the spindles 11, 12. The tube member 32 is formed with internal keys and grooves, i.e. splines, for engagement with matching external keys and grooves, or splines, formed on the two spindles 11, 12. These splines thus correspond to the coupling means according to the first two embodiments, as described above. In other respects, the control device according to the third embodiment functions completely analogously to the first embodiments. The tube portions 9a, 9b are formed with slots corresponding to the above-described guiding slots 24-26.

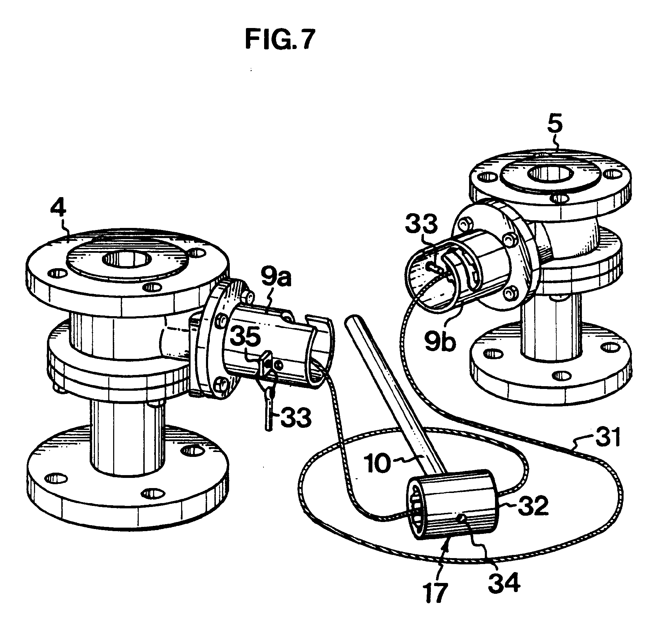

The control device according to the invention preferably is fitted with locking means for locking the lever 10 in the different positions, thereby preventing the valves 4, 5 from being tampered with. Fig. 6 illustrates this locking function in more detail. In order to lock the lever 10 in the position illustrated in Fig. 6, a pin 33 is inserted through a hole in the tube portion 9a and into a recess 34 in the tube member 32 (see Fig. 7). Then the pin 33 is connected with a fixed mounting 35 on the tube portion 9a by means of an ordinary padlock 36. Similar locking facilities are of course to be found on the other tube portion 9b.

In Fig. 7, both valves 4, 5 are open. If in this position one wants to prevent somebody from trying to close one of the valves 4, 5, both pins 33 are inserted in the respective tube portion 9a, 9b and are secured by padlocks 36. The pins 33 then prevent engagement between the carrier element 17 and the spindles 11, 12.

It should be observed that the control device can be provided with elastic protective sleeves (not shown) which in the first embodiment cover the guiding slot (Fig. 2) and which in the second embodiment cover the joint between each tube end and spindle (Fig. 4). If required, protective sleeves can of course also be used in the third embodiment (Figs 6-7).

The control device according to the first embodiment of the invention is readily adjustable to different distances between the two outlets on the pressure vessel in that the length of the connection tube between the shut-off valves is adapted thereto. An improved possibility of optional mutual positioning and alignment of the valves is, of course, achieved by means of the control device according to the third embodiment of the invention. There the orientation of the valve spindles can be almost fully optional. When needed, the spindles can be fitted with extension members which at their free end comprise engaging means or longitudinal splines. In this specification, the term "spindle" includes such extension members.

Finally, it should also be emphasised that the invention is not limited to the embodiments described above, but several modifications are conceivable within the scope of the inventive idea as presented in the appended claims. The shut-off valves may be some other type of valve, e.g. throttle valves which are moved through 1/4 of a turn between the open and closed positions. Moreover, the means for coupling engagement between the carrier element and the spindle ends, as well as the guiding operation can be accomplished in other ways. The important thing is that coupling engagement with and rotating of one spindle is carried out, without the other spindle being affected. It should also be emphasised that the lever in the second embodiment can be replaced by a turning tool, for example a spanner, which is moved into engagement with an external recess on the tube for axial movement and, respectively, rotation thereof.

## Claims

1. Device for alternately controlling two cooperating valves (4, 5) for switching between different states, viz. a first state in which the first valve is open and the second is closed, and a second state in which the first valve is closed and the second is open, each valve (4, 5) having a valve member (13, 14) which is rotatable between an open and a closed state by means of a spindle (11, 12), **characterised** in that one end of each valve spindle (11, 12) is nonrotatably connected with the valve member (13, 14), while the other end is free, and that said valves (4, 5) can be set to a third state, in which both valves are open, by means of a lever-operated carrier element (17) having a first coupling means (19) which is movable, by means of said lever (10), into engagement with a matching coupling means (20) in the free end of the first spindle (11) for rotating the same and the associated valve member (13) by means of the lever, without the second spindle (12) being affected, and having a second coupling means (21) which is movable, by means of said lever, into engagement with a matching coupling means (22) in the free end of the second spindle (12) for rotating the same and the associated valve member (14) by means of the lever, without the first spindle (11) being affected, said device further having means (9, 18, 23; 27-30; 31-32) for guiding the carrier element (17) in such a manner that this is movable by means of said lever (10) from said third state, in which the valves are open, into coupling engagement with one of the spindles (11, 12) but, in the first or second state, is prevented from being moved into coupling engagement with the spindle pertaining to the valve which in this state is open, thereby preventing a state in which both valves (4, 5) are fully or partly closed.

2. Device according to claim 1, wherein the two spindles (11, 12) are directed axially towards one another and their free ends define between themselves a space in which the carrier element (17) is axially movable by means of said lever (10) between the coupling engagements with the respective spindle end during guiding of a surrounding tube (9; 27) which contains said carrier element (17) and into which the opposed spindles (11, 12) are inserted from each end of said tube.

3. Device according to claim 2, wherein the tube (9) extends between said valves (4, 5) and is fixedly connected at each end with the respective valve, and that said tube (9) in the area of said space between the spindle ends is formed with an open guiding slot (23) in which an end portion (18) of said lever (10) is positioned and connected with said carrier element (17) for lever operation of the movements thereof between the coupling engagements with the spindle ends and while being guided in the slot (23).

4. Device according to claim 3, wherein the guiding slot (23) comprises an axial portion (24) within which said carrier element (17) is axially movable by means of said lever (10) between the coupling engagements with the respective spindle end corresponding to two end positions of said lever, and two portions (25, 26) partially extending in the circumferential direction of said tube (9) which are located in said two end positions and within each of which said carrier element (17) engages the respective spindle end and is rotatable by pivoting said lever (10) for opening and closing the associated valve, and wherein the two circumferential slot portions (25, 26) pass into the axial slot portion (24) in each end position.

5. Device according to claim 2, wherein said lever (10) is connected with said tube (27) which consequently is axially slidable on the spindles (11, 12) a distance corresponding to the length of said space between the spindle ends and in which the carrier element (17) is fixedly mounted, and wherein the outside of said spindles (11, 12) is fitted with guide means (28, 29) for cooperation with matching guide means (30) on the inside of said tube (27) for lever operation of the carrier element (17) between the coupling engagements with said spindles.

6. Device according to claim 5, wherein the guide means of each spindle (11, 12) comprise an axial slot (28) for axial guiding of said tube (27) and, thus, said carrier element (17) between the coupling engagements with the respective spindle end corresponding to two end positions of said lever (10), and a slot (29) partially extending in the circumferential direction of the spindle (12) and adapted to guide said tube (27), when the carrier element (17) engages the spindle end for rotation by pivoting said lever (10), wherein the guide means of said tube (27) comprises an inwardly directed projection (30) which engages and follows the guiding slots (28, 29) of the associated spindle (12), and wherein said circumferential slot (29) passes into the axial slot (28) in the end position.

7. Device according to claim 1, wherein said means for guiding the carrier element (17) comprise an elongate, flexible member (31), preferably a wire, which is connected with each valve (4, 5) and on which the carrier element (17) is arranged so as to be freely movable between the valve spindles (11, 12).

8. Device according to claim 7, wherein said carrier element (17) is a tube member (32) fixedly connected with said lever (10) and having internal keys and grooves, i.e. splines, which form said coupling means of the carrier element (17) and are adapted to engage matching external keys and grooves, i.e. splines, on each valve spindle (11, 12) which form the coupling means thereof, and wherein the tube member (32) is slipped over and freely movable along said flexible member (31).

9. Device according to claim 7 or 8, wherein each valve (4, 5) has a tube portion (9a, 9b) surrounding the associated spindle (11, 12) and formed with slots for guiding the movements of said lever (10).

10. Device according to any one of the preceding claims, wherein locking means (33-36) are arranged for locking said lever (10) in the three positions, thereby preventing the valves (4, 5) from being tampered with.

## Patentansprüche

1. Vorrichtung zur abwechselnden Betätigung von zwei zusammenwirkenden Ventilen (4, 5) zum Wechseln zwischen verschiedenen Positionen, und zwar einer ersten Position, in welcher das erste Ventil offen und das zweite geschlossen ist, und einer zweiten Position, in welcher das erste Ventil geschlossen und das zweite offen ist, wobei jedes Ventil (4, 5) ein Ventilglied (13, 14) aufweist, das mittels einer Spindel (11, 12) zwischen einer offenen und einer geschlossenen Position drehbar ist, dadurch **gekennzeichnet**, dass das eine Ende jeder Ventilspindel (11, 12) mit dem Ventilglied (13, 14) drehfest verbunden ist, während das andere Ende frei ist, und dass die Ventile (4, 5) in eine dritte Position versetzt werden können, in welcher beide Ventile offen sind, und zwar mittels eines hebelbetätigten Mitnehmerelements (17) mit einem ersten Kupplungsglied (19), das mittels des Hebels (10) zum Eingriff mit einem entsprechenden Kupplungsglied (20) am freien Ende der ersten Spindel (11) zum Drehen derselben und des zugehörigen Ventilglieds (13) bringbar ist, ohne Einwirkung auf die zweite Spindel (12), und mit einem zweiten Kupplungsglied (21), das mittels des Hebels zum Eingriff mit einem entsprechenden Kupplungsglied (22) am freien Ende der zweiten Spindel (12) zum Drehen derselben und des zugehörigen Ventilglieds (14) bringbar ist, ohne Einwirkung auf die erste Spindel (11), wobei die Vorrichtung ferner Glieder (9, 18, 23; 27-30; 31-32) aufweist, um das Mitnehmerelement (17) derart zu führen, dass dieses mittels des Hebels (10) von der dritten Position, in welcher die Ventile offen sind, zum Kupplungseingriff mit einer der Spindeln (11, 12) bringbar ist, jedoch in der ersten oder zweiten Position daran gehindert wird, zum Kupplungseingriff mit der Spindel gebracht zu werden, welche zum Ventil gehört, das in dieser Position offen ist, wodurch ein Zustand verhindert wird, in welchem beide Ventile (4, 5) ganz oder teilweise geschlossen sind.

2. Vorrichtung nach Anspruch 1, bei welcher die beiden Spindeln (11, 12) axial aufeinander gerichtet sind und ihre freien Enden zwischen sich einen Raum abgrenzen, in welchem das Mitnehmerelement (17) mittels des Hebels (10) zwischen den Kupplungseingriffen mit dem jeweiligen Spindelende während des Führens eines umgebenden Rohrs (9; 27) axial bewegbar ist, welches das Mitnehmerelement (17) enthält und in welches die aufeinander gerichteten Spindeln (11, 12) von jeweils einem Ende des Rohrs eingesteckt sind.

3. Vorrichtung nach Anspruch 2, bei welcher das Rohr (9) sich zwischen den Ventilen (4, 5) erstreckt und an jedem Ende mit dem jeweiligen Ventil fest verbunden ist, und das Rohr (9) im Bereich des genannten Raums zwischen den Spindelenden mit einem offenen Führungsschlitz (23) ausgebildet ist, in welchem ein Endabschnitt (18) des Hebels (10) plaziert ist und mit dem Mitnehmerelement (17) zur Hebelbetätigung von dessen Bewegungen zwischen den Kupplungseingriffen mit den Spindelenden und während des Führens des Mitnehmerelements im Schlitz (23) verbunden ist.

4. Vorrichtung nach Anspruch 3, bei welcher der Führungsschlitz (23) einen axialen Abschnitt (24), in dem das Mitnehmerelement (17) mittels des Hebels (10) zwischen den Kupplungseingriffen mit dem jeweiligen Spindelende entsprechend zwei Endpositionen des Hebels axial bewegbar ist, und zwei Abschnitte (25, 26) aufweist, die sich teilweise in Umfangsrichtung des Rohrs (9) erstrecken und sich in den genannten beiden Endpositionen befinden, wobei in jedem der genannten zwei Abschnitte das Mitnehmerelement (17) mit dem jeweiligen Spindelende eingreift und durch Schwenken des Hebels (10) zum Öffnen bzw. Schliessen des zugehörigen Ventils drehbar ist, und bei welcher die beiden rundumverlaufenden Schlitzabschnitte (25, 26) in jeder Endposition in den axialen Schlitzabschnitt (24) übergehen.

5. Vorrichtung nach Anspruch 2, bei welcher der Hebel (10) mit dem Rohr (27) verbunden ist, das folglich an den Spindeln (11, 12) eine Strecke entsprechend der Länge des genannten Raums zwischen den Spindelenden axial gleitend verschiebbar ist, und in dem das Mitnehmerelement (17) fest angebracht ist, und bei welcher die Aussenseite der Spindeln (11, 12) mit Führungsgliedern (28, 29) versehen ist, um mit den entsprechenden Führungsgliedern (30) auf der Innenseite des Rohrs (27) zusammenzuwirken, und zwar zur Hebelbetätigung des Mitnehmerelements (17) zwischen den Kupplungseingriffen mit den Spindeln.

6. Vorrichtung nach Anspruch 5, bei welcher die Führungsglieder jeder Spindel (11, 12) einen axialen Schlitz (28) zum axialen Führen des Rohrs (27) und somit des Mitnehmerelements (17) zwischen den Kupplungseingriffen mit dem jeweiligen Spindelende entsprechend den beiden Endpositionen des Hebels (10) und einen Schlitz (29) umfassen, der sich teilweise in Umfangsrichtung der Spindel (12) erstreckt und vorgesehen ist, das Rohr (27) zu führen, wenn das Mitnehmerelement (17) mit dem Spindelende zum Drehen durch Schwenken des Hebels (10) eingreift, bei welcher das Führungsglied des Rohrs (27) einen nach innen gerichteten Vorsprung (30) umfasst, der mit den Führungsschlitzen (28, 29) der zugehörigen Spindel (12) eingreift und diesen folgt, und bei welcher der rundumverlaufende Schlitz (29) in der Endposition in den axialen Schlitz (28) übergeht.

7. Vorrichtung nach Anspruch 1, bei welcher die Glieder zum Führen des Mitnehmerelements (17) ein langgestrecktes biegsames Glied (31), vorzugsweise einen Draht, umfassen, der mit jedem Ventil (4, 5) verbunden ist und an dem das Mitnehmerelement (17) angeordnet ist, um zwischen den Ventilspindeln (11, 12) frei bewegbar zu sein.

8. Vorrichtung nach Anspruch 7, bei welcher das Mitnehmerelement (17) ein Rohrglied (32) ist, das mit dem Hebel (10) fest verbunden ist und inwendige Keile und Nuten, d.h. Keilwellennuten, aufweist, die die Kupplungsglieder des Mitnehmerelements (17) bilden und vorgesehen sind, um mit entsprechenden auswendigen Keilen und Nuten, d.h. Keilwellennuten, an jeder Ventilspindel (11, 12) einzugreifen, welche deren Kupplungsglieder bilden, und bei welcher das Rohrglied (32) über das biegsame Glied (31) gesteckt ist und längs dieses frei bewegbar ist.

9. Vorrichtung nach Anspruch 7 oder 8, bei welcher jedes Ventil (4, 5) einen Rohrabschnitt (9a, 9b) aufweist, der die zugehörige Spindel (11, 12) umschliesst und mit Schlitzen zum Führen der Bewegungen des Hebels (10) ausgebildet ist.

10. Vorrichtung nach einem der vorhergehenden Ansprüche, bei welcher Verriegelungsglieder (33-36) zum Verriegeln des Hebels (10) in den drei Positionen angeordnet sind, wodurch unerwünschtes Betätigen der Ventile (4, 5) verhindert wird.

## Revendications

1. Dispositif de régulation alternative de deux soupapes (4, 5) coopérantes entre des états différents, à savoir un premier état dans lequel la première soupape est ouverte et la seconde soupape est fermée, et un deuxième état dans lequel la première soupape est fermée et la seconde soupape est ouverte, chaque soupape (4, 5) ayant un corps de soupape (13, 14) qu'une tige (11, 12) peut faire tourner entre une position ouverte et une position fermée, **caractérisé** en ce qu'une première extrémité de chaque tige de soupape (11, 12) est reliée de façon non rotative au corps de soupape (13, 14), tandis que l'autre extrémité de la tige est libre, et que lesdites soupapes (4, 5) peuvent être amenées à un troisième état, dans lequel les deux soupapes sont ouvertes, au moyen d'un élément d'entraînement (17) à levier ayant un premier moyen d'accouplement (19) qui, par le levier (10), peut être amené en prise avec un moyen d'accouplement (20) correspondant prévu à l'extrémité libre de la première tige (11) afin de faire tourner cette dernière, ainsi que le corps de soupape (13) y associé, au moyen du levier, la seconde tige (12) n'étant aucunement influencée, ainsi qu'un second moyen d'accouplement (21) qui, par le levier, peut être amené en prise avec un moyen d'accouplement (22) correspondant prévu à l'extrémité libre de la seconde tige (12) afin de faire tourner cette dernière, ainsi que le corps de soupape (14) y associé, au moyen du levier, la première tige (11) n'étant aucunement influencée, ledit dispositif comprenant en outre des moyens (9, 18, 23; 27-30; 31-32) destinés à guider l'élément d'entraînement (17) de telle façon que ce dernier puisse être amené par le levier (10) à partir du troisième état, dans lequel les soupapes sont ouvertes, à un état en prise d'accouplement avec l'une des tiges (11, 12) mais, dans le premier ou le deuxième état, soit empêché d'être amené en prise d'accouplement avec la tige appartenant à la soupape qui est ouverte dans l'état en question, ainsi empêchant les deux soupapes (4, 5) d'être complètement ou partiellement fermées à la fois.

2. Dispositif selon la revendication 1, dans lequel les deux tiges (11, 12) sont dirigées axialement l'une vers l'autre, et leurs extrémités libres définissent entre elles un espace où l'élément d'entraînement (17) peut être déplacé axialement par ledit levier (10) entre les prises d'accouplement avec les extrémités de tige respectives pendant le guidage d'un tuyau environnant (9; 27), qui contient l'élément d'entraînement (17) et dans lequel les tiges (11, 12) opposées sont insérées par chaque extrémité.

3. Dispositif selon la revendication 2, dans lequel le tuyau (9) s'étend entre lesdites soupapes (4, 5) et est relié fixement à chacune de ses extrémités aux soupapes respectives, et le tuyau (9) est muni, dans la région dudit espace se trouvant entre les extrémités de tige, d'une fente de guidage (23) ouverte dans laquelle une partie d'extrémité (18) dudit levier (10) est placée et reliée audit élément d'entraînement (17) pour régulation à levier des mouvements de celui-ci entre les prises d'accouplement avec les extrémités de tige, en étant guidée dans ladite fente (23).

4. Dispositif selon la revendication 3, dans lequel la fente de guidage (23) comprend une partie axiale (24) dans laquelle l'élément d'entraînement (17) peut être déplacé axialement par ledit levier (10) entre les prises d'accouplement avec les extrémités de tige respectives correspondant à deux positions finales dudit levier, ainsi que deux parties (25, 26) qui s'étendent partiellement dans la direction circonférentielle dudit tuyau (9) et qui sont situées au niveau desdites deux positions finales et dans chacune desquelles ledit élément d'entraînement (17) est en prise avec les extrémités de tige respectives et peut être tourné au moyen d'un pivotement dudit levier (10) pour ouvrir et fermer la soupape y associée, dispositif dans lequel les deux parties de fente circonférentielles (25, 26) passent en la partie de fente axiale (24) dans chaque position finale.

5. Dispositif selon la revendication 2, dans lequel ledit levier (10) est relié au tuyau (27), qui donc peut glisser axialement sur les tiges (11, 12) une distance correspondant à la longueur dudit espace se trouvant entre les extrémités de tige et dans lequel l'élément d'entraînement (17) est monté fixement, dispositif dans lequel lesdites tiges (11, 12) sont munies à l'extérieur de moyens de guidage (28, 29) destinés à coopérer avec des moyens de guidage (30) correspondants prévus à l'intérieur dudit tuyau (27) afin de manoeuvrer à levier l'élément d'entraînement (17) entre les prises d'accouplement avec lesdites tiges.

6. Dispositif selon la revendication 5, dans lequel le moyen de guidage de chaque tige (11, 12) comprend une fente axiale (28) pour guidage axial dudit tuyau (27) et, par conséquent, dudit élément d'entraînement (17) entre les prises d'accouplement avec les extrémités de tige respectives correspondant à deux positions finales dudit levier (10), ainsi qu'une fente (29) s'étendant partiellement dans la direction circonférentielle de la tige (12) et conçue pour guider le tuyau (27) lorsque l'élément d'entraînement (17) est en prise avec l'extrémité de tige afin que cette dernière soit tournée au moyen d'un pivotement dudit levier (10), dispositif dans lequel les moyens de guidage du tuyau (27) comprennent une saillie (30) qui est dirigée vers l'intérieur et qui est en prise avec, et se déplace dans, les fentes de guidage (28, 29) de la tige (12) y associée, ladite fente circonférentielle (29) passant en la fente axiale (28) dans la position finale.

7. Dispositif selon la revendication 1, dans lequel les moyens de guidage de l'élément d'entraînement (17) comprennent un élément flexible et allongé (31), de préférence un fil métallique, qui est relié à chaque soupape (4, 5) et sur lequel est prévu l'élément d'entraînement (17) de manière à être libre de se déplacer entre les tiges de soupape (11, 12).

8. Dispositif selon la revendication 7, dans lequel l'élément d'entraînement (17) est un élément de tuyau (32) qui est relié fixement audit levier (10) et est muni de clavettes et de rainures intérieures, c'est-à-dire des cannelures, qui constituent lesdits moyens d'accouplement de l'élément d'entraînement (17) et qui sont conçues pour venir en prise avec des clavettes et des rainures extérieures correspondantes, c'est-à-dire des cannelures, prévues sur chaque tige de soupape (11, 12) et constituant les moyens d'accouplement de celle-ci, dispositif dans lequel l'élément de tuyau (32) est mis sur ledit élément flexible (31) de façon à pouvoir se déplacer librement le long de ce dernier.

9. Dispositif selon la revendication 7 ou 8, dans lequel chaque soupape (4, 5) comprend une partie de tuyau (9a, 9b) entourant la tige (11, 12) y associée et étant munie de fentes de guidage des mouvements dudit levier (10).

10. Dispositif selon l'une quelconque des revendications précédentes, dans lequel des moyens de verrouillage (33-36) sont prévus pour verrouiller le levier (10) dans lesdits trois états, ainsi protégeant les soupapes (4, 5) contre la manipulation.
